# EUROPÄISCHE PATENTSCHRIFT

(11) **EP 2 324 231 B1**
(45) Veröffentlichungstag und Bekanntmachung des Hinweises auf die Patenterteilung: **18.01.2012**
(21) Anmeldenummer: 09779698.1
(22) Anmeldetag: 10.06.2009
(51) Int. Cl.: F02M 63/02, B60K 6/20, B60K 6/24, B60K 6/26, B60K 6/48, B60W 10/30

(54) **DRUCKPUMPENVORRICHTUNG FÜR EIN HYBRIDFAHRZEUG**
PRESSURE PUMP DEVICE FOR A HYBRID VEHICLE
DISPOSITIF À POMPE À PRESSION POUR VÉHICULE HYBRIDE

(30) Priorität: 07.08.2008 DE 102008041067
(43) Veröffentlichungstag der Anmeldung: 25.05.2011
(73) Patentinhaber: Robert Bosch GmbH, 70442 Stuttgart (DE)
(72) Erfinder: RANDOLL, Helmut, 71665 Vaihingen (DE); SCHULZ, Udo, 71665 Vaihingen/Enz (DE); BIESTER, Juergen, 71034 Boeblingen (DE)
(86) Internationale Anmeldenummer: PCT/EP2009/057140
(87) Internationale Veröffentlichungsnummer: WO 2010/015446

(56) Entgegenhaltungen:
- EP-A2- 1 916 421
- WO-A1-2008/022865
- DE-A1- 10 343 480
- DE-A1- 19 704 153
- US-A1- 2007 204 817

## Beschreibung

### Technisches Gebiet

Die vorliegende Erfindung betrifft das Gebiet der Hybridfahrzeuge.

### Stand der Technik

Heutige Hybridfahrzeuge sind üblicherweise mit einem elektrischen Antrieb und einem Verbrennungsantrieb, beispielsweise einem Benzinmotor oder einem Dieselmotor, ausgestattet. Die bekannten Hybridkonzepte erlauben eine serielle, eine parallele und eine leistungsverzweigende Kopplung dieser Antriebseinheiten. Dabei bietet das Parallel-Hybridkonzept Vorteile gegenüber dem seriellen und dem leistungsverzweigenden Hybridkonzept, weil es den Einsatz bereits vorhandener Motor- beziehungsweise Getriebebauteile ermöglicht und einen hohen Wirkungsgrad unter allen Einsatzbedingungen bei sehr günstigem Verbrauch aufweist.

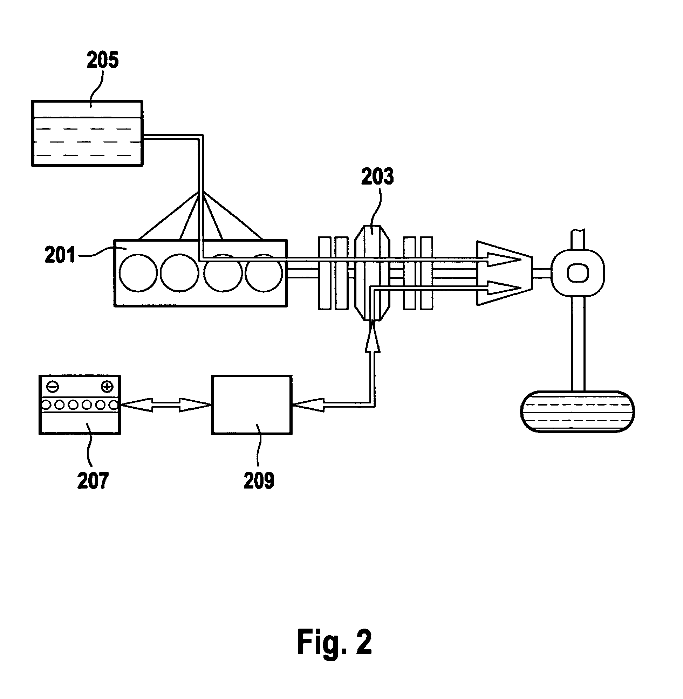

Figur 2 zeigt ein Parallel-Hybridfahrzeug mit einem Verbrennungsmotor 201 und einem Elektromotor und -generator 203, die jeweils mit einem Antriebsstrang mechanisch gekoppelt sind. Der Verbrennungsmotor 201 wird mit in einem Tank 205 befindlichem Kraftstoff beschickt und erzeugt durch dessen Verbrennung eine Antriebskraft zum Antreiben des Hybridfahrzeugs. Der Elektromotor und - generator 201 wird im Elektromotorbetrieb mittels einer Batterie 207 mit elektrischer Energie zum Antreiben des Hybridfahrzeugs versorgt. Im Generatorbetrieb kann der Elektromotor und generator 203 beispielsweise zum Aufladen der Batterie 207 eingesetzt werden. Zwischen dem Elektromotor und -generator 203 und der Batterie 207 ist ferner ein Inverter 209 angeordnet.

Moderne Verbrennungsmotoren, die auch in Hybridfahrzeugen eingesetzt werden, weisen oft einen Kraftstoffdruckspeicher auf, der auch mit "Rail" bezeichnet wird, der mittels einer Hochdruckpumpe mit unter Druck stehendem Kraftstoff beaufschlagt wird. In heutigen Common-Rail-Einspritzsystemen ist die Hochdruckpumpe übersetzt oder direkt an eine Nockenwelle des Verbrennungsmotors angeflanscht. Bei einer mechanischen Kopplung der Hochdruckpumpe mit der Nockenwelle insbesondere bei Parallel-Diesel-Hybridfahrzeugen entsteht jedoch das Problem, den Kraftstoffdruck bei abgeschaltetem Motor für beispielsweise einen Start-Stopp-Betrieb zu halten und beim Übergang vom elektromotorischen zum hybrid- oder dieselmotorischen Betrieb aufzubauen. Daher können auch keine kleineren Hochdruckpumpen mit einer höheren Drehzahl eingesetzt und betrieben werden, weil derartige Pumpen mehr Zeit zum Befüllen des Kraftstoffdruckspeichers benötigen. Sie erreichen ferner einen Maximaldruck bereits bei einer Motordrehzahl von 1.000 U/min.

Zur Entkopplung der Hochdruckpumpe von der Nockenwelle könnte prinzipiell ein weiterer Elektromotor vorgesehen werden. Die DE 100 03 736 A1 beschreibt beispielsweise eine Betriebseinrichtung für eine Brennkraftmaschine eines konventionellen Kraftfahrzeugs mit einem zusätzlichen Elektromotor, der zum Antrieb einer Kraftstoffpumpe genutzt wird. Dieses Konzept ist zum Betreiben einer Kraftstoffdruckpumpe für einen Kraftstoffdruckspeicher jedoch nicht geeignet. Denn beispielsweise für einen 2-Liter-Dieselmotor mit vier Zylindern und 105 kW Nennleistung müsste eine notwendige mechanische Antriebsleistung vom ca. 3 kW bei etwa 300 Nm zur Erzeugung des notwendigen Rail-Drucks und der maximalen Drehzahl bereitgestellt werden. Der Wirkungsgrad einer Hochdruckpumpe liegt üblicherweise bei etwa 95 %. Da heutige Generatoren etwa 2 kVV bei 12 V erzeugen, müsste aufgrund dieser Bordnetz-Limitierung daher zusätzlich zu dem weiteren Elektromotor ein weiterer Generator bereitgestellt werden, was jedoch mit erhöhtem Aufwand und mit erhöhten Kosten verbunden ist. Darüber hinaus wäre eine weitere Ansteuerelektronik und, bei geschätzten 150 W Verlustleistung in einem Steuergerät, eine weitere Kühlung vorzusehen.

Aus dem Stand der Technik ist weiter die EP 1 916 421 A2 bekannt, welche eine Pumpenantriebsanordnung betrifft. Diese verfügt über ein erstes Pumpenantriebselement, das durch eine erste oder eine zweite Antriebseinrichtung angetrieben ist. Dabei ist vorgesehen, dass das Pumpenantriebselement durch ein Kopplungselement entweder über eine erste Freilaufeinrichtung mit der ersten Antriebseinrichtung oder über eine zweite Freilaufeinrichtung mit der zweiten Antriebseinrichtung drehfest verbindbar beziehungsweise verbunden ist.

Die Aufgabe der Erfindung besteht darin, ein effizientes Konzept zum Antreiben einer Hochdruckpumpe zum Beaufschlagen eines Kraftstoffdruckspeichers mit Kraftstoff in Hybridfahrzeugen zu schaffen.

Diese Aufgabe wird durch die Merkmale der unabhängigen Ansprüche gelöst. Vorteilhafte Weiterbildungsformen sind in den abhängigen Ansprüchen angegeben.

### Offenbarung der Erfindung

Die Erfindung basiert auf der Erkenntnis, dass die Hochdruckpumpe in Hybridfahrzeugen von einer Nockenwelle des Verbrennungsmotors entkoppelt und stattdessen mit beispielsweise einer Antriebswelle des elektrischen Antriebs verbunden und durch diesen angetrieben werden kann.

Erfindungsgemäß wird das hybride Antriebskonzept daher erweitert und auch dazu eingesetzt, die Hochdruckpumpe zumindest zeitweise von der Nockenwelle des Verbrennungsmotors zu entkoppeln und zu deren Antrieb den ohnehin vorhandenen Antriebselektromotor des Hybridfahrzeugs zumindest in dessen vorbestimmten Betriebszuständen zu nutzen. Das erfindungsgemäße Konzept ist insbesondere in Parallel-Hybridfahrzeugen, beispielsweise in Parallel-Diesel-Hybridfahrzeugen, einsetzbar, weil die Hochdruckpumpe mit einem dem Elektromotor und -generator des Hybridfahrzeugs zugeordneten Hybrid-Antriebsstrang mechanisch direkt gekoppelt werden kann.

Ein Vorteil des erfindungsgemäßen Konzeptes besteht darin, dass ein verbessertes Start-und Wiederstartverhalten eines Verbrennungsmotors, beispielsweise eines Dieselmotors, infolge eines rechtzeitigen Rail-Druckaufbaus erreicht werden kann. Darüber hinaus trägt das erfindungsgemäße Konzept zur Steigerung der Betriebssicherheit bei, weil die Hochdruckpumpe unabhängig von einem Betriebszustand des Verbrennungsmotors abgeschaltet werden kann. Der erfindungsgemäße Betrieb der Hochdruckpumpe durch den elektrischen Antriebsmotor ist ferner vorteilhaft bei einer Diagnose des Hochdruckkreises umfassend die Hochdruckpumpe, die Zuleitungen und den Kraftstoffdruckspeicher und ermöglicht ferner eine effiziente Erfassung dessen Stellcharakteristik. Darüber hinaus werden die infolge des verzögerten Einsetzens des Dieselmotors bei Wechsel der Betriebszustände des Parallel-Diesel-Hybrids aufgrund des zuvor notwendigen Druckaufbaus im Rail entstehenden Nachteile vermieden. Das erfindungsgemäße Konzept trägt ferner zur Verbesserung des Komforts sowie der Einspritzgenauigkeit in derzeitigen Common-Rail-Einspritzsystemen bei.

Die Erfindung betrifft eine Druckpumpenvorrichtung für ein Hybridfahrzeug, das mittels eines Verbrennungsmotors mit einem Kraftstoffdruckspeicher und mittels eines elektrischen Antriebs antreibbar ist. Die Druckpumpenvorrichtung umfasst eine Druckpumpe, insbesondere eine Kraftstoffdruckpumpe oder eine Hochdruckpumpe, die zum Beschicken des Kraftstoffdruckspeichers mit Kraftstoff mit dem elektrischen Antrieb mechanisch koppelbar und durch diesen antreibbar ist.

Gemäß einem Ausführungsbeispiel umfasst die Druckpumpenvorrichtung ferner eine Drehzahländerungseinrichtung zum Herabsetzen oder zum Heraufsetzen einer Drehzahl, wobei die Druckpumpe mittels der Drehzahländerungseinrichtung mit dem elektrischen Antrieb, insbesondere mit einer Welle des elektrischen Antriebs, mechanisch koppelbar ist.

Gemäß einem Ausführungsbeispiel umfasst die Druckpumpe eine Zumesseinheit, wobei die Druckpumpenvorrichtung ferner eine Zumesseinheitsteuerungseinrichtung umfasst, die ausgebildet ist, die Zumesseinheit zum Einstellen einer Kraftstoffförderungsmenge, beispielsweise einer Nullförderungsmenge, in Abhängigkeit von einem Antriebsmodus, insbesondere in ausschließlich elektrischem Antriebsmodus, zu steuern.

Gemäß einem Ausführungsbeispiel umfasst die Druckpumpenvorrichtung ferner eine Diagnoseeinheit zum Erfassen der Leistungsfähigkeit der Druckpumpe in einem vorbestimmten Antriebsmodus, insbesondere in einem antriebslosen Modus oder in ausschließlich elektrischem Antriebsmodus. Die Diagnoseeinheit ist ausgebildet, einen Ausgangsdruck der Druckpumpe zum Erfassen einer Stellcharakteristik einer Zumesseinheit der Druckpumpe oder zum Erfassen einer Stellcharakteristik eines Druckregelventils der Druckpumpe oder zum Erfassen eines Ausgangsdruckverlaufs, insbesondere in Abhängigkeit von einem elektrischen Wert, beispielsweise einer Spannung oder eines Stroms, des elektrischen Antriebs, zu erfassen.

Gemäß einem Ausführungsbeispiel ist die Druckpumpenvorrichtung ausgebildet, den elektrischen Antrieb zuzuschalten oder abzuschalten, um den Kraftstoffdruck in dem Kraftstoffdruckspeicher insbesondere in einem Segelbetriebsmodus, in dem der Verbrennungsmotor von einem Antriebsstrang entkoppelt ist, zu erhöhen oder zu senken. Gemäß einem Ausführungsbeispiel ist die Druckpumpenvorrichtung ausgebildet, die Druckpumpe von dem elektrischen Antrieb zu entkoppeln oder den elektrischen Antrieb auszuschalten und/oder zumindest ein Druckventil der Druckpumpe zu öffnen, falls eine Drehzahländerung des Verbrennungsmotors einen vorbestimmten Schwellwert übersteigt. Hierzu kann die Druckpumpenvorrichtung beispielsweise ein Drehzahlsignal von einem Drehzahlmesser empfangen oder einen Drehzahlmesser aufweisen.

Die Erfindung betrifft ferner eine elektrische Antriebsvorrichtung für ein Hybridfahrzeug, das mittels eines Verbrennungsmotors mit einem Kraftstoffdruckspeicher und mittels eines elektrischen Antriebs antreibbar ist. Die elektrische Antriebsvorrichtung umfasst einen elektrischen Antrieb, beispielsweise einen Elektromotor, und die erfindungsgemäße Druckpumpenvorrichtung zum Beschicken des Kraftstoffdruckspeichers mit Kraftstoff, wobei die Druckpumpe der Druckpumpenvorrichtung mit dem elektrischen Antrieb, insbesondere mit einer Welle des elektrischen Antriebs, mechanisch gekoppelt und durch diesen antreibbar ist.

Die Erfindung betrifft ferner ein Verfahren zum Betreiben einer Druckpumpe in einem Hybridfahrzeug, das mittels eines Verbrennungsmotors mit einem Kraftstoffdruckspeicher und mittels eines elektrischen Antriebs antreibbar ist, mit dem Schritt des mechanischem Koppelns der Druckpumpe mit dem elektrischen Antrieb, um die Druckpumpe zum Beschicken des Kraftstoffdruckspeichers mit Kraftstoff anzutreiben.

Gemäß einem Ausführungsbeispiel umfasst das Verfahren den Schritt des Steuerns einer Zumesseinheit der Druckpumpe zum Einstellen einer Kraftstoffförderungsmenge in Abhängigkeit von einem Antriebsmodus, insbesondere in ausschließlich elektrischem Antriebsmodus.

Weitere Verfahrensschritte ergeben sich aus der Funktionalität der erfindungsgemäßen Druckpumpenvorrichtung.

Die Erfindung betrifft ferner ein elektrisches Antriebsverfahren für ein Hybridfahrzeug, das mittels eines Verbrennungsmotors mit einem Kraftstoffdruckspeicher und mittels eines elektrischen Antriebs antreibbar ist. Das elektrische Antriebsverfahren umfasst den Schritt des Antreibens des Hybridfahrzeugs und einer Druckpumpe zum Beschicken des Kraftstoffdruckspeichers des Verbrennungsmotors mit Kraftstoff mit dem erfindungsgemäßen elektrischen Antrieb.

### Zeichnungen

Weitere Ausführungsbeispiele der Erfindung werden anhand der beiliegenden Zeichnungen erläutert. Es zeigen:
- Fig. 1: eine Druckpumpenvorrichtung; und
- Fig. 2: ein prinzipielles Konzept eines Parallel-Hybrids.

### Beschreibung der Ausführungsformen

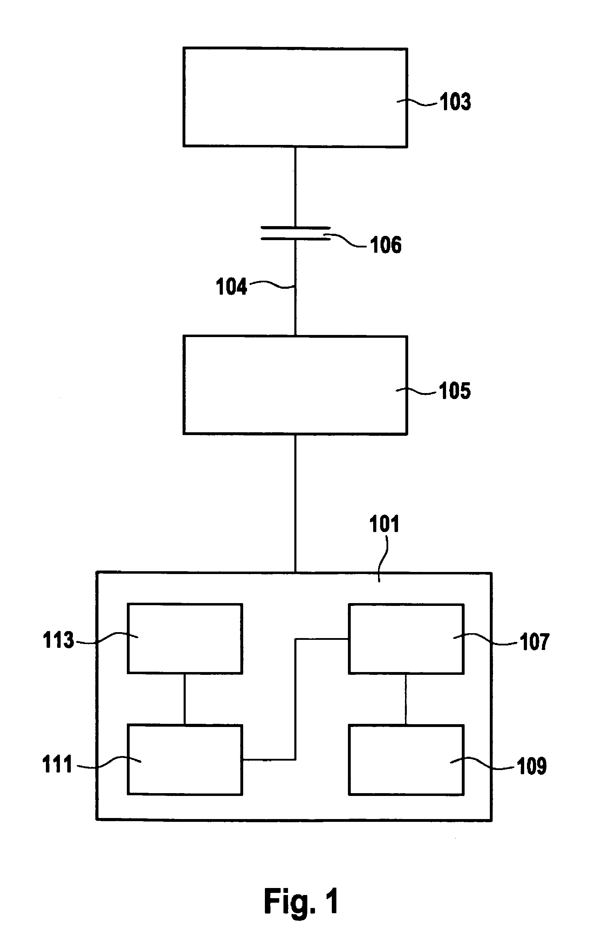

Fig. 1 zeigt eine Druckpumpenvorrichtung für ein Hybridfahrzeug, insbesondere für ein Parallel-Hybridfahrzeug, das mittels eines in Fig. 1 nicht dargestellten Verbrennungsmotors mit einem Kraftstoffdruckspeicher angetrieben wird. Die Druckpumpenvorrichtung umfasst eine Druckpumpe 101, die zum Beschicken des Kraftstoffdruckspeichers mit Kraftstoff vorgesehen und mit einem elektrischen Antrieb 103, beispielsweise mit einem Elektromotor, mechanisch gekoppelt ist. Beispielsweise ist die Druckpumpe 101 mit einer Welle 104 des elektrischen Antriebs 103 mechanisch verbunden, wobei optional eine Drehzahländerungseinrichtung 105 vorgesehen sein kann, um eine Drehzahl der Welle des Elektromotors heraufzusetzen oder bevorzugt herabzusetzen, um die Druckpumpe 101 mit einer niedrigeren Drehzahl zu betreiben. Die Drehzahländerungseinrichtung 105 kann beispielsweise auf der Basis von Zahnrädern ausgebildet und vorgesehen sein, die Drehzahl beispielsweise um den Faktor 1/3, 1/4, 1/5, 1/6, 1/7, 1/8, 1/9 oder 1/10 herabzusetzen. Auf diese Weise kann eine Anpassung der Drehzahl der Welle des elektrischen Antriebs 103 an eine Charakteristik der Druckpumpe 101 angepasst werden. Die Druckpumpe 101 kann beispielsweise für Hochdrücke von 1000 bar, 2000 bar oder 3000 bar ausgelegt sein. Optional kann zwischen dem elektrischen Antrieb 103 und Drehzahländerungseinrichtung 105 eine weitere Kupplung 106 vorgesehen sein.

Die Druckpumpe 101 kann ferner eine Zumesseinheit 107 zum Einstellen einer Kraftstofffördermenge sowie eine Zumesseinheit-Steuerungseinrichtung 109 zum Steuern der Zumesseinheit 107 umfassen. Die Kraftstoffdruckpumpe 101 kann ferner eine Diagnoseeinheit 111 sowie zumindest ein Druckregelventil 113 aufweisen. Die Diagnoseeinheit 111 ist beispielsweise vorgesehen, eine Stellcharakteristik der Zumesseinheit 107 oder des Druckregelventils 113 zu erfassen und auf dieser Basis beispielsweise einen Arbeitspunkt der Zumesseinheit 107 und/oder des Druckregelventils 113 beispielsweise adaptiv einzustellen.

Gemäß einem Aspekt bilden der elektrische Antrieb 103, beispielsweise ein Elektromotor und -generator, und die Druckpumpe 101 eine elektrische Antriebsvorrichtung für ein Hybridfahrzeug mit den in Fig. 1 optional dargestellten, weiteren Elementen. Dabei treibt die Welle 104 des elektrischen Antriebs 103 sowohl die Druckpumpe 101 als auch das Hybridfahrzeug, beispielsweise ein Parallel-Diesel-Hybridfahrzeug, an.

Bei Hybridfahrzeugen, insbesondere bei Parallel-Diesel-Hybriden mit einem Common-Rail-Einspritzsystem, können unterschiedliche Antriebsmodi unterschieden werden, die sich jeweils durch einen unterschiedlichen Betrieb des elektrischen Antriebs und des Verbrennungsantriebs auszeichnen. In einem Generator-Modus wird der elektrische Antrieb zum Laden der Energiespeicher eingesetzt. In einem Rekuperations-Modus kann der elektrische Antrieb beispielsweise als eine elektrische Generatorbremse mit Energierückspeisung eingesetzt werden. In einem so genannten Boost-Modus treiben sowohl der Elektromotor als auch der Verbrennungsmotor das Hybridfahrzeug an. Ferner ist elektrisches Fahren mit einem geschleppten Verbrennungsmotor möglich. In einem elektrischen Fahrmodus wird das Hybridfahrzeug ausschließlich elektrisch angetrieben. Ferner ist ein Segelbetriebsmodus zu nennen, in dem der Verbrennungsmotor von einem Antriebsstrang mechanisch getrennt ist.

Erfindungsgemäß treibt bei einer ausschließlich verbrennungsmotorischen Fahrt nur der Verbrennungsmotor das Hybridfahrzeug an, so dass eine Kupplung des Verbrennungsmotors und eine Getriebekupplung geschlossen sind. Dieser Betriebszustand unterscheidet sich bezüglich der Hochdruckerzeugung nicht von einem konventionellen Antriebsstrang eines Verbrennungsmotors mit einem Common-Rail-Einspritzsystem mit einer an der Nockenwelle verbauten Hochdruckpumpe. In dem Boost-Modus treiben der Verbrennungs- und der Elektromotor das Hybridfahrzeug an, wobei die Kupplung des Verbrennungsmotors und die Kupplung des Getriebes geschlossen sind. Auch in diesem Zustand unterscheidet sich die Hochdruckerzeugung nicht von konventionellen Antriebsstrangssystemen.

In dem elektrischen Antriebsmodus werden sowohl das Hybridfahrzeug als auch die Druckpumpe 101 durch den Elektromotor 103 angetrieben, wobei der Verbrennungsmotor ausgeschaltet ist. In diesem Modus ist die Kupplung des Verbrennungsmotors offen und die Getriebekupplung geschlossen. Um das elektrische Anfahren durch einen Momentenbedarf der Druckpumpe 101 nicht zusätzlich zu behindern, kann die Druckpumpe 101 in dieser Antriebsphase mit einer Nullförderung seitens der Zumesseinheit 107 betrieben werden. Wird eine vorbestimmte Fahrgeschwindigkeit oder eine vorbestimmte Drehzahl des Elektromotors erreicht, so kann erfindungsgemäß bereits vor einem Start des Verbrennungsmotors der Kraftstoffdruck in dem Rail aufgebaut werden.

Bei einem Übergang von einer elektromotorischen Fahrt zu einer beispielsweise dieselmotorischen Fahrt wird der Dieselmotor gestartet, wobei die Dieselmotorkupplung und die Getriebekupplung geschlossen sind. In einer ersten Antriebsphase treibt der Elektromotor 103 das Hybridfahrzeug an, wobei der Dieselmotor ausgeschaltet ist. Während bei einem Dieselmotorstart, beispielsweise bei einem Neustart oder bei einem Fahrzyklus-Beginn, 150 - 200 bar Rail-Druck ausreichend sind, so richtet sich der Kraftstoffdruck für ein Wiedereinsetzen des Dieselmotors nach einem aktuellen Betriebspunkt des Hybridfahrzeugs. Um beim Wiedereinsetzen des Dieselmotors unerwünschte akustische Effekte wie beispielsweise das Motornageln durch einen zu hohen Rail-Druck zu reduzieren, kann vor dem Wiedereinsetzen des Dieselmotors ein etwas geringerer Rail-Druck eingeregelt werden.

In dem Segelbetriebsmodus sind die Dieselmotorkupplung und die Getriebekupplung offen. In diesem Betriebszustand kann unter der Annahme, dass nur die Hochdruckpumpe mit dem Elektromotor und -generator 103 gekoppelt ist und dass der Einfluss von weiteren Komponenten auf das Drehmoment bekannt sind oder diese abgeschaltet werden können, eine Diagnose der Druckpumpe 101 erfolgen. Dazu kann die Druckpumpe 101 mittels des Elektromotors 103 betrieben werden, wobei ein Strom und eine Spannung des Elektromotors 103 und ein Rail-Druckverlauf in einem in Fig. 1 nicht dargestellten Rail beispielsweise mit einer vorbestimmten Abtastfrequenz gemessen werden können. Aus dem Strom- und/oder dem Spannungsverlauf sowie aus dem Rail-Druckverlauf können auf der Basis eines Vergleichs mit vorgegebenen Soll-Werten Aussagen bezüglich des Drifts, der Leakage oder bezüglich der Hochdruckbereichsdefekte getroffen werden. Insbesondere ist eine Aussage über einen Steller der Zumesseinheit 109 und des Druckregelventils 113, bezüglich der Druckpumpe 101 und deren Pumpenelementen sowie bezüglich der Kraftstoffleitungen möglich. Auf diese Weise können beispielsweise eine Mengenbilanz und ein Wirkungsgrad der Druckpumpe 101 bestimmt werden.

Darüber hinaus lassen sich im Segelbetrieb auch die Stellcharakteristika der Zumesseinheit 109 und des Druckregelventils 113 erfassen. Zur Bestimmung der Stellcharakteristik des Druckregelventils 113 kann beispielsweise in einem einspritzfreien Zustand der Rail-Druck durch die Hochdruckpumpe 101 aufgebaut werden, wobei die Stellcharakteristik des Druckregelventils 113 auf der Basis von verschiedenen elektrischen Tastverhältnissen bezüglich des Druckaufbaus und dessen Messung erfasst werden kann.

Zur Erfassung der Stellcharakteristik der Zumesseinheit 109 kann der Rail-Druck beispielsweise bei einer konstanten Drehzahl des Elektromotors 103 und beispielsweise in einem einspritzfreien Zustand durch die Hochdruckpumpe 101 bei verschiedenen elektrischen Tastverhältnissen der Zumesseinheit 109 aufgebaut werden. Über den Druckaufbauverlauf und dessen Messung lässt sich die Stellcharakteristik der Zumesseinheit 109 erfassen. Dabei ist das Druckregelventil 113 bevorzugt geschlossen. Darüber hinaus kann auch der Einfluss der Kraftstofftemperatur beispielsweise durch eine Messung berücksichtigt werden.

Prinzipiell ist es ferner möglich, einen Zusammenhang zwischen einer Kraftstoffeinspritzmenge und einer elektrischen Ansteuerdauer von einem Injektor zu erfassen. Dazu können beispielsweise nach erfolgtem Druckaufbau in dem Rail die Förderung abgeschaltet und nur ein Injektor mit einer bestimmten elektrischen Ansteuerdauer betrieben werden. Dabei kann die eingespritzte Menge beispielsweise auf der Basis des Druckabbauvergleichs abgeschätzt werden. Um den Einfluss von Leckagen im Hochdruckkreis zu eliminieren, kann der Hochdruckkreis zuvor beispielsweise auf Hochdruck von beispielsweise 1.000 bar gebracht werden, ohne dass die Einspritzventile und Steller am Hochdruckkreis geöffnet werden. Der Druckverlauf ist dann ein Maß für die Leckage im Hochdruckkreis, die bei der Bestimmung eines Zusammenhanges zwischen der Einspritzmenge und der elektrischen Ansteuerdauer beispielsweise durch einen Abzug berücksichtigt werden kann. Weiterhin lässt sich die Steuermenge jedes einzelnen Injektors ermitteln. Dazu kann die elektrische Ansteuerdauer so weit verringert werden, dass es zu keinen Einspritzungen kommt, was beispielsweise anhand der Dieselmotordrehzahl erkannt werden kann. Der Druckabfall im Hochdruckkreis abzüglich der Leckage der Komponenten am Hochdruckkreis ergibt dann die zu erfassende Steuermenge.

Beispielsweise kann der Elektromotor und -generator 103 ferner sowohl vom Getriebe als auch vom Verbrennungsmotor getrennt und bedarfsgerecht zugeschaltet werden, um einen Druckabfall im Rail zu kompensieren bzw. entsprechend einem gewünschten Lastprofil vor dem Wiedereinsetzen des Verbrennungsmotors aufzubauen. Darüber hinaus kann beispielsweise im Segelbetrieb eine redundante Abschaltung des Verbrennungsmotors durchgeführt werden, falls beispielsweise eine ungewollte Beschleunigung beispielsweise über eine hohe Drehzahländerung festgestellt wird. In diesem Fall können beide Kupplungen geöffnet, der Elektromotor 103 ausgeschaltet und das Druckventil 113 bzw. mehrere Druckventile geöffnet werden. Durch die Entkopplung der Hochdruckpumpe 101 von dem Verbrennungsmotor können somit ein unerwünschter Anstieg der Motordrehzahl und somit ein "Durchgehen" des Motors verhindert werden.

Im Generatormodus ist die Verbrennungsmotorkupplung geschlossen und die Getriebekupplung offen. In diesem Betriebsmodus erfolgt ein Aufladen der Batterie, wobei die Anbindung der Hochdruckpumpe 101 zum Verbrennungsmotor beispielsweise dem konventionellen Antriebsstrang entspricht. Der lastabhängige Druckaufbau im Rail als auch die Druckhaltefunktion können durch eine Saugregelung in der Zumesseinheit 107 realisiert werden.

Im Rekuperationsmodus sind die Dieselmotorkupplung offen und die Getriebekupplung geschlossen. In diesem Betriebsmodus erfolgt ein Aufladen der Batterie über den von dem getriebeseitigen Antriebsstrang angetriebenen elektrischen Antrieb 103. Der lastabhängige Druckaufbau im Rail und die Druckhaltefunktion können auch in diesem Betriebsmodus durch die Saugregelung in der Zumesseinheit 107 realisiert werden.

Bei geschlossener Dieselmotorkupplung und bei geschlossener Getriebekupplung wird der Dieselmotor im Schubbetrieb betrieben. In diesem Betriebsmodus wird zum Verzögern des Fahrzeugs zusätzlich noch eine Reibleistung des Motors im Schleppbetrieb genutzt. Der lastabhängige Druckaufbau im Rail als auch die Druckhaltefunktion können auch in diesem Betriebsmodus durch eine Saugregelung in der Zumesseinheit 107 realisiert werden.

Das erfindungsgemäße Konzept kann sowohl für Benzin- als auch für Dieseleinspritzsysteme, die nach dem Common-Rail-Prinzip arbeiten, eingesetzt werden. Daher gelten die vorstehend im Zusammenhang mit einem Dieselmotor beschriebenen Ausführungsbeispiele sinngemäß für Benzinmotoren oder für Benzin-Diesel-Motoren.

## Patentansprüche

1. Elektrische Antriebsvorrichtung für ein Hybridfahrzeug, das mittels eines Verbrennungsmotors mit einem Kraftstoffdruckspeicher und mittels eines elektrischen Antriebs antreibbar ist, mit dem elektrischen Antrieb (103) des Hybrid fahrzeugs und einer Druckpumpenvorrichtung zum Beschicken des Kraftstoffdruckspeichers mit Kraftstoff, **dadurch gekennzeichnet, dass** eine Druckpumpe (101) der Druckpumpenvorrichtung mit dem elektrischen Antrieb (103), insbesondere mit einer Welle (104) des elektrischen Antriebs (103), mechanisch koppelbar und durch diesen antreibbar ist.

2. Elektrische Antriebsvorrichtung nach Anspruch 1, **dadurch gekennzeichnet, dass** die Druckpumpenvorrichtung ferner eine Drehzahländerungseinrichtung (105) zum Herabsetzen oder zum Heraufsetzen einer Drehzahl aufweist, und dass die Druckpumpe (101) mittels der Drehzahländerungseinrichtung (105) mit dem elektrischen Antrieb, insbesondere mit einer Welle des elektrischen Antriebs, mechanisch koppelbar ist.

3. Elektrische Antriebsvorrichtung nach einem der vorhergehenden Ansprüche, **dadurch gekennzeichnet, dass** die Druckpumpe (101) eine Zumesseinheit (107) umfasst, und dass die Druckpumpenvorrichtung eine Zumesseinheitssteuerungseinrichtung (109) umfasst, die ausgebildet ist, die Zumesseinheit (107) zum Einstellen einer Kraftstoffförderungsmenge in Abhängigkeit von einem Antriebsmodus, insbesondere einem ausschließlich elektrischen Antriebsmodus, zu steuern.

4. Elektrische Antriebsvorrichtung nach einem der vorhergehenden Ansprüche, **dadurch gekennzeichnet, dass** die Druckpumpenvorrichtung ferner eine Diagnoseeinheit (111) zum Erfassen der Leistungsfähigkeit der Druckpumpe (101) in einem vorbestimmten Antriebsmodus, insbesondere in einem Segelbetriebsmodus oder in ausschließlich elektrischem Antriebsmodus, aufweist, wobei die Diagnoseeinheit (111) ausgebildet ist, einen Ausgangsdruck der Druckpumpe (101) zum Erfassen einer Stellcharakteristik der Zumesseinheit (107) der Druckpumpe (101) oder zum Erfassen einer Stellcharakteristik eines Druckregelventils (113) der Druckpumpe (101) oder zum Erfassen eines Ausgangsdruckverlaufs, insbesondere in Abhängigkeit von einem elektrischen Wert des elektrischen Antriebs, zu erfassen.

5. Elektrische Antriebsvorrichtung nach einem der vorhergehenden Ansprüche, **dadurch gekennzeichnet, dass** die Druckpumpenvorrichtung ausgebildet ist, den elektrischen Antrieb zuzuschalten oder abzuschalten, um den Kraftstoffdruck in dem Kraftstoffdruckspeicher insbesondere in einem Segelbetriebsmodus zu erhöhen oder zu senken.

6. Elektrische Antriebsvorrichtung gemäß einem der vorhergehenden Ansprüche, **dadurch gekennzeichnet, dass** die Druckpumpenvorrichtung ausgebildet ist, die Druckpumpe (101) von dem elektrischen Antrieb zu entkoppeln oder den elektrischen Antrieb auszuschalten oder zumindest ein Druckventil (113) der Druckpumpe (101) zu öffnen, falls eine Drehzahländerung des Verbrennungsmotors einen vorbestimmten Schwellwert übersteigt.

7. Verfahren zum Betreiben einer Druckpumpe in einem Hybridfahrzeug, das mittels eines Verbrennungsmotors mit einem Kraftstoffdruckspeicher und mittels eines elektrischen Antriebs antreibbar ist, mit:
mechanischem Koppeln der Druckpumpe mit dem elektrischen Antrieb, um die Druckpumpe zum Beschicken des Kraftstoffdruckspeichers mit Kraftstoff anzutreiben.

8. Verfahren zum Betreiben der Druckpumpe gemäß Anspruch 7, mit:
Steuem einer Zumesseinheit der Druckpumpe zum Einstellen einer Kraftstoffförderungsmenge in Abhängigkeit von einem Antriebsmodus.

9. Elektrisches Antriebsverfahren für ein Hybridfahrzeug, das mittels eines Verbrennungsmotors mit einem Kraftstoffdruckspeicher und mittels eines elektrischen Antriebs antreibbar ist, mit:
Antreiben des Hybridfahrzeugs und einer Druckpumpe zum Beschicken des Kraftstoffdruckspeichers des Verbrennungsmotors mit Kraftstoff mit dem elektrischen Antrieb gemäß Anspruch 7 oder 8.

## Claims

1. Electric drive device for a hybrid vehicle which can be driven by means of an internal combustion engine with a fuel pressure accumulator and by means of an electric drive, having the electric drive (103) of the hybrid vehicle and having a pressure pump device for delivering fuel to the fuel pressure accumulator, **characterized in that** a pressure pump (101) of the pressure pump device can be mechanically coupled to the electric drive (103), in particular to a shaft (104) of the electric drive (103), and driven by the latter.

2. Electric drive device according to Claim 1, **characterized in that** the pressure pump device also has a rotational speed varying device (105) for reducing or for increasing the rotational speed, and **in that** the pressure pump (101) can be mechanically coupled via the rotational speed varying device (105) to the electric drive, in particular to a shaft of the electric drive.

3. Electric drive device according to one of the preceding claims, **characterized in that** the pressure pump (101) comprises a metering unit (107), and **in that** the pressure pump device comprises a metering unit control device (109) which is designed to control the metering unit (107) so as to set a fuel delivery rate as a function of a drive mode, in particular an exclusively electric drive mode.

4. Electric drive device according to one of the preceding claims, **characterized in that** the pressure pump device also has a diagnostic unit (111) for detecting the performance of the pressure pump (101) in a predetermined drive mode, in particular in a coasting operating mode or in an exclusively electric drive mode, wherein the diagnostic unit (111) is designed to detect an outlet pressure of the pressure pump (101) in order to detect a control characteristic of the metering unit (107) of the pressure pump (101) or to detect a control characteristic of a pressure regulating valve (113) of the pressure pump (101) or to detect an outlet pressure profile, in particular as a function of an electrical value of the electric drive.

5. Electric drive device according to one of the preceding claims, **characterized in that** the pressure pump device is designed to activate or deactivate the electric drive in order to increase or decrease the fuel pressure in the fuel pressure accumulator in particular in a coasting operating mode.

6. Electric drive device according to one of the preceding claims, **characterized in that** the pressure pump device is designed to decouple the pressure pump (101) from the electric drive or to deactivate the electric drive or to open at least one pressure valve (113) of the pressure pump (101) if a rotational speed variation of the internal combustion engine exceeds a predetermined threshold value.

7. Method for operating a pressure pump in a hybrid vehicle which can be driven by means of an internal combustion engine with a fuel pressure accumulator and by means of an electric drive, comprising:
mechanically coupling the pressure pump to the electric drive in order to drive the pressure pump to deliver fuel to the fuel pressure accumulator.

8. Method for operating the pressure pump according to Claim 7, comprising:
controlling a metering unit of the pressure pump in order to set a fuel delivery rate as a function of a drive mode.

9. Electric drive method for a hybrid vehicle which can be driven by means of an internal combustion engine with a fuel pressure accumulator and by means of an electric drive, comprising:
driving the hybrid vehicle and a pressure pump in order to deliver fuel to the fuel pressure accumulator of the internal combustion engine by means of the electric drive, according to Claim 7 or 8.

## Revendications

1. Dispositif d'entraînement électrique pour un véhicule hybride, qui peut être entraîné au moyen d'un moteur à combustion avec un accumulateur à pression de carburant et au moyen d'un entraînement électrique, doté de l'entraînement électrique (103) du véhicule hybride et d'un dispositif de pompe à pression pour l'alimentation de l'accumulateur à pression de carburant en carburant, **caractérisé en ce qu'**une pompe à pression (101) du dispositif de pompe à pression peut être couplée mécaniquement avec l'entraînement (103) électrique, en particulier avec un arbre (104) de l'entraînement électrique (103), et peut être entraînée par celui-ci.

2. Dispositif d'entraînement électrique selon la revendication 1, **caractérisé en ce que** le dispositif de pompe à pression présente également un dispositif de variation de régime (105) pour l'abaissement ou pour l'élévation d'un régime, et **en ce que** la pompe à pression (101) peut être couplée mécaniquement au moyen du dispositif de variation de régime (105) avec l'entraînement électrique, en particulier avec un arbre de l'entraînement électrique.

3. Dispositif d'entraînement électrique selon l'une des revendications précédentes, **caractérisé en ce que** la pompe à pression (101) comprend une unité régulatrice (107), et **en ce que** le dispositif de pompe à pression comprend un dispositif de commande d'unité régulatrice (109), qui est conçu pour commander l'unité régulatrice (107) pour le réglage d'une quantité de transport de carburant en fonction d'un mode d'entraînement, en particulier un mode d'entraînement uniquement électrique.

4. Dispositif d'entraînement électrique selon l'une des revendications précédentes, **caractérisé en ce que** le dispositif de pompe à pression présente également une unité de diagnostic (111) pour l'enregistrement de la capacité de puissance de la pompe à pression (101) dans un mode d'entraînement prédéfini, en particulier dans un mode d'exploitation en roue libre ou dans un mode d'entraînement uniquement électrique, l'unité de diagnostic (111) étant conçue pour enregistrer une pression de sortie de la pompe à pression (101) pour l'enregistrement d'une caractéristique de réglage de l'unité régulatrice (107) de la pompe à pression (101) ou pour l'enregistrement d'une caractéristique de réglage d'une vanne régulatrice de pression (113) de la pompe à pression (101) ou pour l'enregistrement d'une courbe de pression de sortie, en particulier en fonction d'une valeur électrique de l'entraînement électrique.

5. Dispositif d'entraînement électrique selon l'une des revendications précédentes, **caractérisé en ce que** le dispositif de pompe à pression est conçu pour mettre en route ou arrêter l'entraînement électrique, afin d'élever ou d'abaisser la pression de carburant dans l'accumulateur à pression de carburant en particulier dans un mode d'exploitation en roue libre.

6. Dispositif d'entraînement électrique selon l'une des revendications précédentes, **caractérisé en ce que** le dispositif de pompe à pression est conçu pour dissocier la pompe à pression (101) de l'entraînement électrique ou arrêter l'entraînement électrique ou ouvrir au moins une vanne de pression (113) de la pompe à pression (101), si une variation de régime du moteur à combustion dépasse une valeur seuil prédéfinie.

7. Procédé pour faire fonctionner une pompe à pression sur un véhicule hybride, qui peut être entraîné au moyen d'un moteur à combustion avec un accumulateur à pression de carburant et au moyen d'un entraînement électrique, comprenant :
le couplage mécanique de la pompe à pression avec l'entraînement électrique, afin d'entraîner la pompe à pression pour l'alimentation de l'accumulateur à pression de carburant en carburant.

8. Procédé pour faire fonctionner la pompe à pression selon la revendication 7, comprenant :
la commande d'une unité régulatrice de la pompe à pression pour le réglage d'une quantité de transport de carburant en fonction d'un mode d'entraînement.

9. Procédé d'entraînement électrique pour un véhicule hybride, qui peut être entraîné au moyen d'un moteur à combustion avec un accumulateur à pression de carburant et au moyen d'un entraînement électrique, comprenant :
l'entraînement du véhicule hybride et d'une pompe à pression pour l'alimentation de l'accumulateur à pression de carburant du moteur à combustion en carburant comprenant l'entraînement électrique selon la revendication 7 ou 8.
